# EUROPEAN PATENT APPLICATION

(11) **EP 3 916 697 A1**
(43) Date of publication of application: **01.12.2021**
(21) Application number: 20176273.9
(22) Date of filing: 25.05.2020
(51) Int. Cl.: G08G 1/16, G01S 5/16, G01S 11/12, G01S 13/72, G01S 13/931, G01S 17/931, G06K 9/00, G06K 9/62, B60W 30/095, B60W 60/00

(54) **METHOD AND DEVICE FOR PREDICTING THE TRAJECTORY OF A TRAFFIC PARTICIPANT, AND SENSOR SYSTEM**

(71) Applicant: Robert Bosch GmbH, 70442 Stuttgart (DE)
(72) Inventor: Juhasz, Peter Laszlo, 1119 Budapest (HU)

(57) **Abstract**

The invention relates to a computer-implemented method for predicting a trajectory of a traffic participant. Sensor data acquired by at least one vehicle sensor at a plurality of acquisition times is received. Based on the received sensor data, values of at least one motion parameter of the traffic participant are determined for each acquisition time. The trajectory of the traffic participant is predicted using a stochastic regression algorithm which receives the determined values of the at least one motion parameter of the traffic participant as an input.

## Description

The present invention relates to a method and a device for predicting a trajectory of a traffic participant. The invention further relates to a sensor system.

### Prior art

Trajectory prediction is an important part of modern driver assistance systems and essential for autonomous driving. Chief applications are lane estimation, collision avoidance, lane departure prevention and the like.

Trajectory prediction is typically carried out under the assumption that some dynamic parameters are constant. For example, the assumption can be that the velocity stays constant during the time interval of the prediction. Further, a constant acceleration can be assumed, i.e. the acceleration of the vehicle is taken to be constant for the time of interest. Constant turn rate models predict the future trajectory of vehicles by assuming that the turn rate or yaw rate of the vehicles are constant.

DE 10 2013 005 362 A1 discloses a method for analyzing traffic conditions. Future movement behavior is predicted in the form of movement trajectories.

DE 10 2018 210 065 A1 relates to a device for controlling the velocity of a vehicle. Acceleration of a vehicle is controlled based on a risk function.

EP 3 518 001 A1 relates to a method for increasing the reliability of determining the position of a vehicle based on a plurality of detection points. A weight is computed, representing a quantity of the detection points.

Further models may decrease the noise of measurements, e.g. using Kalman filters, or dynamically select a seemingly most suitable model, e.g. using switched linear dynamic systems.

### Disclosure of the Invention

The present invention provides a method and a device for predicting a trajectory of a traffic participant, and a sensor system as recited in the independent claims. Preferred embodiments are set out in the dependent claims.

According to a first aspect, the invention provides a computer-implemented method for predicting a trajectory of a traffic participant. Sensor data acquired by at least one vehicle sensor at a plurality of acquisition times is received. Based on the received sensor data, values of at least one motion parameter of the traffic participant are determined for each acquisition time. The trajectory of the traffic participant is predicted using a stochastic regression algorithm which receives the measured values of the at least one motion parameter of the traffic participant as an input.

According to a second aspect, the invention provides a device for predicting a trajectory of a traffic participant, comprising an interface, a memory and a computer. The interface is adapted to receive sensor data acquired by at least one vehicle sensor at a plurality of acquisition times. The memory is adapted to store the received sensor data. The computer is adapted to determine, based on the received sensor data, values of at least one motion parameter of the traffic participant for each acquisition time, and to predict the trajectory of the traffic participant using a stochastic regression algorithm which receives the determined values of the at least one motion parameter of the traffic participant as an input.

According to a third aspect, the invention provides a sensor system for a vehicle, comprising at least one sensor adapted to acquire sensor data, and a device for predicting a trajectory of the traffic participant according to the invention.

### Advantages of the invention

The assumption that the currently measured dynamical parameters remain constant in the future generally does not hold. Further, the error estimation in models which take dynamical parameters to be constant is based on heuristics rather than rigorous mathematics. Therefore, it is hard to prove that the error estimation of these models is reliable.

An idea of the invention is to apply a stochastic regression algorithm which can provide an optimal trajectory estimation without the assumption that any of the motion parameters of the vehicle are constant. In contrast to models using constant parameters during prediction, a stochastic regression algorithm exploits only the stationarity of the probability distribution of the motion parameters of the traffic participant and the time interval of interest.

According to an embodiment of the method for predicting the trajectory of the traffic participant, the traffic participant is a vehicle and the vehicle sensors are vehicle sensors of the vehicle. According to this embodiment, the trajectory of the vehicle itself is predicted.

According to a further embodiment of the method for predicting the trajectory of the traffic participant, the traffic participant is a vehicle, pedestrian, cyclist or the like, other than the vehicle having the vehicle sensors. According to this embodiment, the trajectories of other traffic participants are predicted.

According to a further embodiment of the method for predicting the trajectory of the traffic participant, predicting the trajectory of the traffic participant comprises the step of computing a predicted acceleration of the traffic participant using the stochastic regression algorithm, and integrating the predicted acceleration of the traffic participant to compute the predicted trajectory of the traffic participant.

According to a further embodiment of the method for predicting the trajectory of the traffic participant, the stochastic regression algorithm is a Gaussian regression algorithm.

According to a further embodiment of the method for predicting the trajectory of the traffic participant, the determined values of the at least one motion parameter of the traffic participant comprise values for a position of the traffic participant, a velocity of the traffic participant and an acceleration of the traffic participant for each acquisition time.

According to a further embodiment of the method for predicting the trajectory of the traffic participant, an uncertainty of the predicted trajectory of the traffic participant is computed using the stochastic regression algorithm. An advantage of a stochastic regression algorithm is that not only the predicted trajectory itself but also an accurate and mathematically correct uncertainty computation, i.e. error estimation, can be provided. The method can therefore provide a grade of determinism. The higher the correlation between two subsequent measurements, the more the earlier measurement influences the later. In other words, the dynamical properties at a specific time in the future are influenced by the measurements in the past. In general, the greater the time difference between them, the less the influence is. Gaussian regression algorithms can quantify the determinism between past measurements and the future estimation.

According to a further embodiment of the method for predicting the trajectory of the traffic participant, the predicted trajectory of the traffic participant and the uncertainty of the predicted trajectory of the traffic participant are used to calculate the probability of an accident for the traffic participant. In case an accident is predicted with a high probability, an automated emergency brake can be triggered.

According to a further embodiment of the method for predicting the trajectory of the traffic participant, the predicted trajectory and the uncertainty of the predicted trajectory are used to estimate a road topology of a road the traffic participant is driving on. For example, the road topology can be estimated beyond the line of sight of the vehicle with the at least one vehicle sensor. The predicted trajectories of other traffic participants can be used to estimate the traffic environment beyond turns, buildings and the like.

According to a further embodiment of the method for predicting the trajectory of the traffic participant, the method is carried out for a plurality of traffic participants. The plurality of traffic participants may include the vehicle having the at least one vehicle sensor. The trajectories of the plurality of traffic participants are predicted, wherein possible interactions between the plurality of traffic participants are taken into account for predicting the trajectory of the plurality of traffic participants. For example, it may be assumed that accidents between the traffic participants are to be avoided by giving an accident a low priority. The possible trajectories of the plurality of traffic participants can thereby be reduced by excluding trajectories that would result in an accident. Accordingly, the driving tasks of the traffic participants are recognized ahead of time.

According to a further embodiment of the method for predicting the trajectory of the traffic participant, the sensor data comprises at least one of camera data or radar data.

### Brief description of the drawings

- Figure 1: shows a schematic block diagram of a sensor system of a vehicle according to an embodiment of the invention;
- Figure 2: shows an exemplary traffic scenario for illustrating a method for predicting a trajectory of a traffic participant in the surrounding of a vehicle;
- Figure 3: shows a schematic flow diagram of a method for predicting a trajectory of a traffic participant according to an embodiment of the invention;
- Figure 4: shows an exemplary average error of estimation in meters for the method according to Figure 3 and a constant-turn-rate model; and
- Figure 5: shows an exemplary error estimation of a standard deviation of a ratio of a real error and an estimated standard deviation of predictions for the method according to Figure 3 and a constantturn-rate model.

In the figures, like reference numerals designate corresponding similar parts.

### Detailed description of the invention

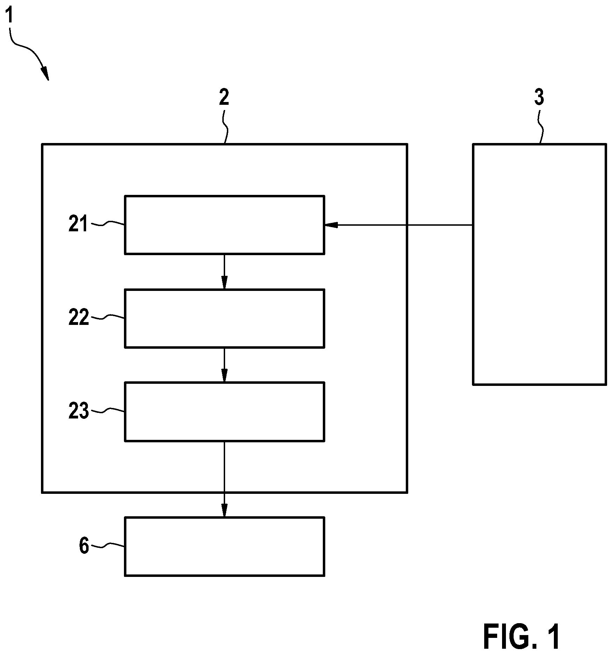

Figure 1 shows a schematic block diagram of a sensor system 1 of a vehicle. The sensor system 1 comprises at least one sensor 3, which may comprise a camera sensor, a radar sensor, a lidar sensor, an infrared sensor or the like. The sensor 3 acquires sensor data at each of a plurality of acquisition times. The sensor data may comprise camera images, radar images, and the like.

The sensor system 1 further comprises a device 2 for predicting a trajectory of a traffic participant. The traffic participant can be the vehicle itself. The traffic participant can also be a further vehicle, a pedestrian, cyclist, or the like. It is also possible to predict both the trajectory of the vehicle itself and of other traffic participants. The device 2 comprises an interface 21 coupled to the at least one sensor 3 and adapted to receive sensor data acquired by the at least one sensor 3. The device 2 further comprises a memory 22 which stores the received sensor data. The memory 22 may comprise a volatile or non-volatile data memory, e.g. a solid-state disk, memory card or the like.

A computer 23 of the device 2 is connected to the memory 22 and has access to the memory 22. The computer 23 may comprise at least one of a central processing unit (CPU), graphics processing unit (GPU), microcontroller, integrated circuit (IC), application-specific integrated circuit (ASIC), or the like.

The computer 23 analyzes the received sensor data to compute values of motion parameters of the traffic participant for each acquisition time. For instance, the computer 23 may determine values for a position, a velocity and an acceleration of the traffic participant for each acquisition time. The values of the motion parameters of the traffic participants are input for a stochastic regression algorithm. The position, velocity and acceleration may be given as two-dimensional vectors relative to a driving plane or can be three-dimensional values.

The stochastic regression algorithm is based on a stochastic process, i.e. a collection of random variables indexed by time, the random variables corresponding to the motion parameters of the traffic participant. Preferably, the stochastic regression algorithm is a Gaussian regression algorithm, also known as kriging. The Gaussian regression algorithm serves as a non-linear multivariate interpolation algorithm. Using the stochastic regression algorithm, the computer 23 computes predicted values of motion parameters of the traffic participant. In particular, the computer 23 may determine the predicted acceleration of the traffic participant for a plurality of time points in the future or as a continuous function of time. The components of the acceleration vector can be modeled as Gaussian stochastic processes, making it possible to handle prediction in an optimal, mathematically correct way. The method automatically adapts to the current situation by considering only the most recent measurements and estimating the probability distribution of the acceleration.

The computer 23 further integrates the distributions of the predicted acceleration of the traffic participant, using the determined position and velocity of the traffic participant at the acquisition times as initial values to determine integration constants. The computer 23 outputs the predicted trajectory, e.g. to a driver assistance system 6.

The computer 23 may further provide an uncertainty of the predicted trajectory of the traffic participant using the stochastic regression algorithm. The computer 23 may use the uncertainty, i.e. the error estimate, together with the predicted trajectory to calculate the probability of an accident for the vehicle with the traffic participant. The computer 23 may also estimate a road topology of a road the vehicle is driving on, using the uncertainty and the predicted trajectory.

The described prediction of the trajectory of the traffic participant can be carried out for a plurality of traffic participants in a surrounding of the vehicle. All trajectories can be predicted simultaneously by taking possible interactions between the traffic participants into account. For instance, the possible trajectories of the traffic participants can be reduced by excluding trajectories that would result in accidents between traffic participants and other traffic participants or the vehicle.

The driver assistance system 6 may control the vehicle based on the predicted trajectory of the further traffic participant. The driver assistance system 6 may be configured to carry out autonomous driving functions by controlling an acceleration, turn rate and the like of the vehicle.

Instead of predicting trajectories of further traffic participants, the device may also predict the trajectory of the vehicle itself. In this case, the sensor 3 may comprise an inertial sensor for measuring the acceleration of the vehicle.

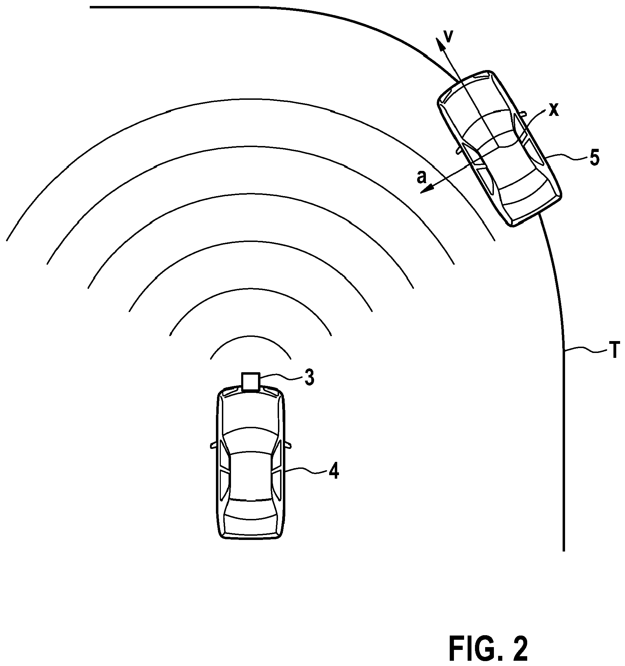

Figure 2 shows an exemplary traffic scenario for illustrating the method for predicting a trajectory T of a traffic participant 5 in the surrounding of a vehicle 4. Based on sensor data acquired by a sensor 3 of the vehicle 4, the computer 23 determines position x, velocity v and acceleration a of the traffic participant 5 for each acquisition time. The trajectory T the traffic participant 5 is driving on is predicted for future time points.

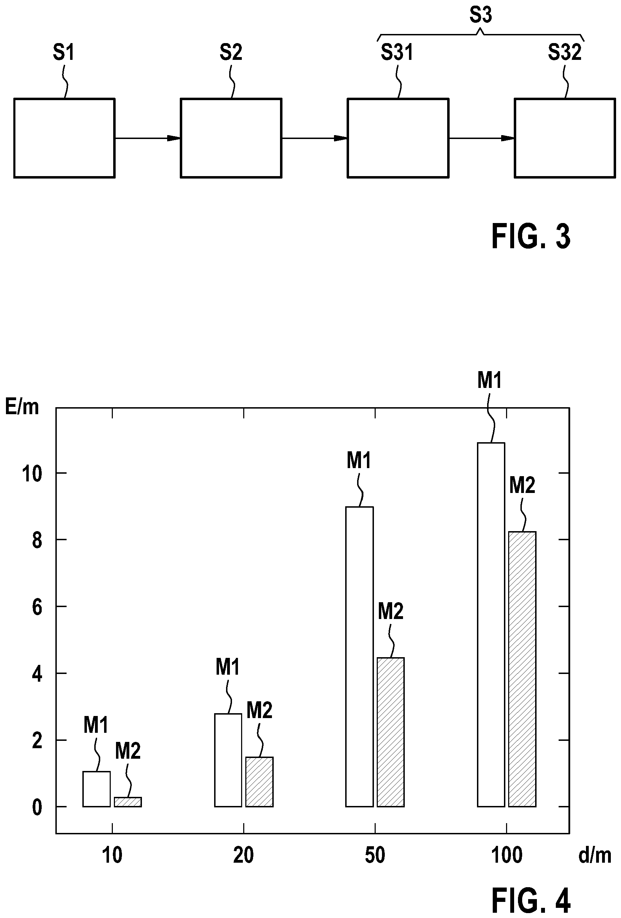

Figure 3 shows a schematic flow diagram of a method for predicting a trajectory of a traffic participant.

In a first method step S1, at least one sensor 3 of the vehicle 4 acquires sensor data for each of a plurality of acquisition times. An interface 21 receives the acquired sensor data.

In a second method step S2, a computer 23 determines, based on the received sensor data, values of at least one motion parameter of the traffic participant for each acquisition time. The motion parameters may comprise a position, a velocity and an acceleration of the traffic participant. The motion parameters may also comprise a turn rate or the like.

In a further method step S3, the trajectory of the traffic participant is predicted. The method step S3 comprises a first sub-step S31, wherein the computer determines a predicted acceleration of the traffic participant using a stochastic regression algorithm. In a further sub-step S32, the computer 23 integrates the predicted acceleration to compute the predicted trajectory of the traffic participant 5.

Figure 4 relates to the quality of the estimated trajectory. Figure 4 shows an exemplary average of the square root of the squared error of estimation (E) in meters (m). The difference between the estimated trajectory from the actual trajectory (based on real measurements) is illustrated at some characteristic distances (d) in meters (m). The error of estimation is displayed for a reference model (M1) and for the method according to the invention (M2). The reference model is a constant-turn-rate model, i.e. assumes that the turn rate does not change within the time span under consideration. It can be seen that at short ranges at about 10 meters ahead of the vehicle, the error of the estimation decreases by about 75 percent as compared to the reference model M1. At middle ranges of about 50 meters ahead of the vehicle, the error of the estimation still decreases by about 50 percent. Also at larger distances of about 100 meters the difference is significant.

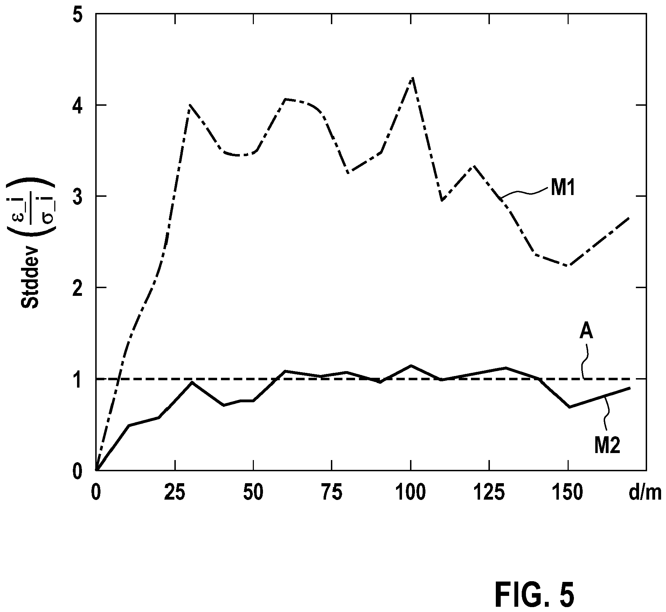

Figure 5 shows an exemplary error estimation of a standard deviation of a ratio of a real error and an estimated standard deviation of predictions for the method according to the invention (M2) and the constant-turn-rate model (M1). The functions depend on distances (d) in meters (m). A target line A is shown, corresponding to a constant value of 1. Figure 5 relates to a quality of the error estimation. Error estimation is a statistical property and can only be verified based on statistical quantities. The evaluation of the error estimation is a complex task, as both the real error and the estimated error are changing with elapsed time and distance. A real error of the i-th prediction is denoted by ε_i and the estimated standard deviation of the i-th prediction is denoted by σ_i. Multiple samples of pairs of real errors ε_i and estimated errors σ_i are examined. If the values of the estimated errors σ_i are good estimations for the values of the real errors ε_i, the standard deviation of ε_i/ σ_i, i.e. Stddev(ε_i/ σ_i), stays close to 1. This follows from the fact that each of the ε_i samples will be normalized with the σ_i estimated error. Thus, if the estimated error is statistically less than the real error, i.e. the model is too optimistic, the standard deviation of the ratio will be greater than 1. If the estimated error on the other hand is statistically greater than the real error, i.e. the model is too pessimistic, the standard deviation of the ratio will be smaller than 1.

As can be seen from figure 5, the reference model M1 is too optimistic about its prediction, the errors it really makes being much larger than it assumes. Based on the new approach, the error estimation is reliable as it is close to the target of 1.

The reliability of the error estimation makes it possible to use the approach in combination with other models. The approach is neither too optimistic nor too pessimistic about its own uncertainty. As a result, during the fusion of the approach with other trajectory estimation methods, the correct trajectory prediction uncertainty will not interfere in the trajectory fusion algorithms.

## Claims

1. A computer-implemented method for predicting a trajectory (T) of a traffic participant (4, 5), comprising the steps:
receiving (S1) sensor data acquired by at least one vehicle sensor (3) at a plurality of acquisition times;
determining (S2), based on the received sensor data, values of at least one motion parameter of the traffic participant (4, 5) for each acquisition time; and
predicting (S3) the trajectory (T) of the traffic participant (4, 5) using a stochastic regression algorithm which receives the determined values of the at least one motion parameter of the traffic participant (4, 5) as an input.

2. The method according to claim 1, wherein predicting the trajectory (T) of the traffic participant (4, 5) comprises the step of computing (S31) a predicted acceleration of the traffic participant (4, 5) using the stochastic regression algorithm, and integrating (S32) the predicted acceleration to compute the predicted trajectory (T) of the traffic participant (4, 5).

3. The method according to claim 1 or 2, wherein the stochastic regression algorithm is a Gaussian regression algorithm.

4. The method according to any of the preceding claims, wherein the determined values of the at least one motion parameter of the traffic participant (4, 5) comprise values for a position (x) of the traffic participant (4, 5), a velocity (v) of the traffic participant (4, 5) and an acceleration (a) of the traffic participant (4, 5) for each acquisition time.

5. The method according to any of the preceding claims, wherein an uncertainty of the predicted trajectory (T) of the traffic participant (4, 5) is computed using the stochastic regression algorithm.

6. The method according to claim 5, wherein the predicted trajectory (T) of the traffic participant (4, 5) and the uncertainty of the predicted trajectory (T) of the traffic participant (4, 5) are used to calculate the probability of an accident and/or estimate a road topology.

7. The method according to any of the preceding claims, wherein the trajectories of a plurality of traffic participants (5) are predicted, wherein possible interactions between the plurality of traffic participants (5) are taken into account for predicting the trajectory (T) of the plurality of traffic participants (5).

8. The method according to any of the preceding claims, wherein the sensor data comprises at least one of camera data or radar data.

9. A device (2) for predicting a trajectory (T) of a traffic participant (4, 5), comprising:
an interface (21) adapted to receive sensor data acquired by at least one vehicle sensor (3) at a plurality of acquisition times;
a memory (22) adapted to store the received sensor data;
a computer (23) adapted to determine, based on the received sensor data, values of at least one motion parameter of the traffic participant (4, 5) for each acquisition time, and to predict the trajectory (T) of the traffic participant (4, 5) using a stochastic regression algorithm which receives the determined values of the at least one motion parameter of the traffic participant (4, 5) as an input.

10. A sensor system (1) for a vehicle (4), comprising:
at least one sensor (3) adapted to acquire sensor data; and
a device (2) according to claim 9 for predicting a trajectory (T) of a traffic participant (4, 5) based on the acquired sensor data.
